# EUROPEAN PATENT APPLICATION

(11) **EP 3 637 641 A1**
(43) Date of publication of application: **15.04.2020**
(21) Application number: 18813478.7
(22) Date of filing: 05.06.2018
(51) Int. Cl.: H04J 3/06

(54) **METHOD AND SYSTEM FOR CLOCK CONTROL IN AGGREGATED LINK**

(30) Priority: 05.06.2017 CN 201710414080
(71) Applicant: ZTE Corporation, Shenzhen, Guangdong 518057 (CN)
(72) Inventor: GUO, Wenjia, Shenzhen Guangdong 518057 (CN)
(74) Representative: Baudler, Ron
(86) International application number: PCT/CN2018/089966
(87) International publication number: WO 2018/223962

(57) **Abstract**

Provided are a method and system for clock control in aggregated links. The method includes: adding first and second clock ports to first and second network elements, respectively; configuring, by the first and second network elements, at least one third clock port and at least one fourth clock port, respectively, wherein parameters of the at least one third clock port are the same as parameters of the first clock port, and the at least one third clock port and the first clock port are both in a first aggregated link group, parameters of the at least one fourth clock port are the same as parameters of the second clock port, and the at least one fourth clock port and the second clock port are both in a second aggregated link group; and performing same message packet interaction on clock ports in the first and second aggregated link groups.

## Description

### TECHNICAL FIELD

The present disclosure relates to the field of clock synchronization network technologies, and in particular relates to a method and system for clock control in aggregated links.

### BACKGROUND

In a digital synchronous network, all network elements need to keep synchronous with the whole network clock source to ensure normal reception of services. The whole network clock source may be a Primary Reference Clock (PRC). In the aggregated link scenario, it is typically required to manually configure clocks on multiple links, the purpose of which is that when one of the links is abnormal, the clock port may be switched to other normal links, thereby ensuring clock synchronization between network elements without affecting the services even when an abnormal link occurs.

Generally, clock synchronization between network elements mainly relies on some synchronization protocols, such as Synchronization Status Message (SSM) protocol, and switching of clock ports further involves settings of some parameters of the old and new ports, such as settings of clock parameters and chip parameters, etc. However, in the aggregated link scenario, the clock ports on the network elements receive and transmit message packets non-uniformly, and parameters are inconsistent on various clock ports, so the parameters carried in the protocol packets need to be coordinated, which may easily cause clock interlock between the network elements.

### SUMMARY

The present disclosure provides a method for clock control in aggregated links, including: adding a first clock port and a second clock port to a first network element and a second network element, respectively; configuring, by the first network element and the second network element, at least one third clock port and at least one fourth clock port, respectively, wherein parameters of the at least one third clock port are the same as parameters of the first clock port, and the at least one third clock port and the first clock port are both in a first aggregated link group, while parameters of the at least one fourth clock port are the same as parameters of the second clock port, and the at least one fourth clock port and the second clock port are both in a second aggregated link group; and performing the same message packet interaction on the clock ports in the first aggregated link group and on the clock ports in the second aggregated link group.

The present disclosure further provides a system for clock control in aggregated links, including a first network element and a second network element added with a first clock port and a second clock port, respectively, wherein the first network element is configured to configure at least one third clock port so that parameters of the at least one third clock port are the same as parameters of the first clock port, and the at least one third clock port and the first clock port are both in a first aggregated link group; and the second network element is configured to configure at least one fourth clock port so that parameters of the at least one fourth clock port are the same as parameters of the second clock port, and the at least one fourth clock port and the second clock port are both in a second aggregated link group, and wherein the same message packet interaction is performed on the clock ports in the first aggregated link group and the clock ports in the second aggregated link group.

The present disclosure further provides a computer readable storage medium storing a computer program thereon which, when executed by a processor, causes the processor to perform the method for clock control in aggregated links according to the present disclosure.

### BRIEF DESCRIPTION OF DRAWINGS

The drawings described herein are intended to provide a further understanding of the present disclosure, and are intended to be a part of the present disclosure. The embodiments of the present disclosure and the description thereof are for explaining the present disclosure and do not constitute an undue limitation of the present disclosure. In the drawings:
Fig. 1 is a schematic flowchart illustrating a method for clock control in aggregated links according to an embodiment of the present disclosure;
Fig. 2 is another schematic flowchart illustrating the method for clock control in aggregated links according to an embodiment of the present disclosure;
Fig. 3 is another schematic flowchart illustrating the method for clock control in aggregated links according to an embodiment of the present disclosure;
Fig. 4 is an exemplary clock topology in an embodiment of the present disclosure; and
Fig. 5 is a schematic architecture diagram of a system for clock control in aggregated links according to an embodiment of the present disclosure.

The implementations of objects, functions, features and advantages of the present disclosure will be described in detail below with reference to the accompanying drawings in conjunction with specific embodiments.

### DETAILED DESCRIPTION

It should be understood that the specific embodiments described herein are merely for illustration of the disclosure and are not intended to limit the disclosure.

In the description herein, suffixes representing elements, such as "module", "component" or "unit", are used only for the convenience of explanation of the present disclosure, and have no specific meaning by themselves. Thus, "module", "component" or "unit" may be used interchangeably.

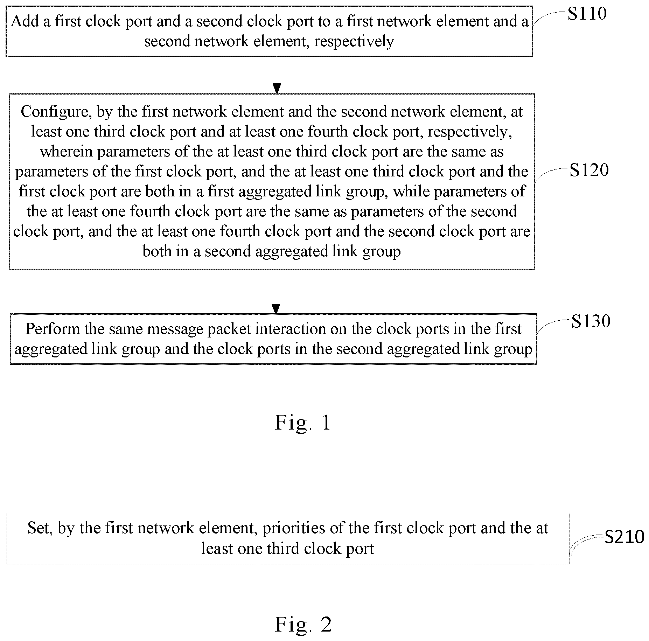

As shown Fig. 1, in an embodiment of the present disclosure, there is provided a method for clock control in aggregated links, the method including the following steps S110-S130.

At step S 110, a first clock port and a second clock port are added to a first network element and a second network element, respectively.

Specifically, in the aggregated links scenario, according to operations of a user, clock ports are added to the first network element and the second network element respectively according to the aggregation groups. That is, a first clock port is added to the first network element, and a second clock port is added to the second network element.

In an embodiment, the added clock may be a Synchronous Ethernet (SyncE) clock.

At step S 120, the first network element and the second network element configure at least one third clock port and at least one fourth clock port, respectively.

In an embodiment, parameters of the at least one third clock port are the same as parameters of the first clock port, and the at least one third clock port and the first clock port are both in a first aggregated link group. Parameters of the at least one fourth clock port are the same as parameters of the second clock port, and the at least one fourth clock port and the second clock port are both in a second aggregated link group.

In an embodiment, the same parameters of the ports includes two parts: one is properties of the clock ports uniformly set by a network element when a user adds the clock ports in an aggregated link group, including clock port types and some control modes for source selection, which may be collectively referred to as clock parameters; the other is configuration parameters of bottom layer hardware and chips after the network element selects a master clock port, which may be collectively referred to as chip parameters.

Specifically, the clock parameters in the same aggregated link group are kept consistent according to the clock port parameters configured by the user. That is, when the user adds any link clock port, the first network element and the second network element automatically configure the clock ports with the same parameters for other ports in the aggregation group.

At step S130, the same message packet interaction is performed on the clock ports in the first aggregated link group and the clock ports in the second aggregated link group.

While the step S130 is performed, the first network element may perform the following operations.

Specifically, the first network element transmits clock protocol packets with the same first quality to the second clock port and the at least one fourth clock port synchronously through the first clock port and the at least one third clock port, respectively.

The first network element may be connected to a Primary Reference Clock (PRC) port before step S110 and specify a clock quality of PRC. The first network element selects the PRC clock source as a master clock source, and records information of the current master clock source.

The first network element compares the clock port information in the first aggregated link group with the information of the master clock source, and transmits clock protocol packets of the same quality PRC to respective ports in the second aggregated link group uniformly through each of the ports in the first aggregated link group.

The first network element uniformly sets parameters of all clock ports in the aggregated link group, for example, sets parameters of a port chip (e.g., a Phy chip) to a master mode, that is, the first network element is a master clock network element.

While the step S130 is performed, the second network element may perform the following operations.

The clock ports on the second network element receive the clock protocol packets transmitted from the respective clock ports on the first network element, respectively, and determine that the clock protocol packets transmitted from the first network element have a uniform quality PRC.

The second network element selects one of the first clock port and the at least one third clock port as a current clock source according to a preset condition, each clock port records tag information of the aggregated link group where the current clock source is located, and each of the network elements records the current master clock source and the tag information of the aggregated link group where the current master clock source is located. In an embodiment, the second network element may automatically select, for example according to the priorities, a clock port with the highest priority from the first clock port and the at least one third clock port as the current master clock source, and record the information of the master clock source and the tag information of the aggregated link group where the master clock source is located. Thus, in a case where a user-configured clock port has the highest priority, the first network element will preferentially select the user-configured clock port.

The second network element compares the clock ports in the second aggregated link group with the information of the master clock source, uniformly sets parameters of the second clock port and the at least one fourth clock port in the second aggregated link group, and sets the chip parameters of the ports to a slave mode, that is, the second network element is a slave network element.

The second network element transmits clock protocol packets with the same second quality to the first clock port and the at least one third clock port through the second clock port and the at least one fourth clock port, respectively.

Specifically, the second network element transmits clock protocol packets with a quality DNU (Do Not Use) carrying information of not available to respective ports in the first aggregated link group uniformly through each of the ports in the second aggregated link group.

The clock ports on the first network element receive the DNU clock protocol packets indicating that the clock ports on the second network element are not available transmitted from the second network element so that the second clock port and the at least one fourth clock port in the second aggregated link group in the second network element are excluded from being selected as a master clock source, thereby avoiding the interlock between the first network element and the second network element.

It will be appreciated by those skilled in the art that in an embodiment, the first network element is set as a master clock network element and the second network element is set as a slave network element, but the master clock network element and the slave network element are relative. If a third network element is further included, for the third network element, the second network element may be set as the master clock network element, and the third network element may be the slave network element, and so on, which is not specifically limited in the embodiments of the present disclosure.

As shown in Fig. 2, the method for clock control in aggregated links in the embodiment of the present disclosure further includes the following step S210 before step S130.

At step S210, the first network element sets priorities of the first clock port and the at least one third clock port.

Specifically, the first network element may set, for example, a user-added clock port (e.g., the first clock port) to have the highest priority, and the other clock ports (e.g., the at least one third clock port) to have sequentially decreased priorities in accordance with their order in the first aggregated link group.

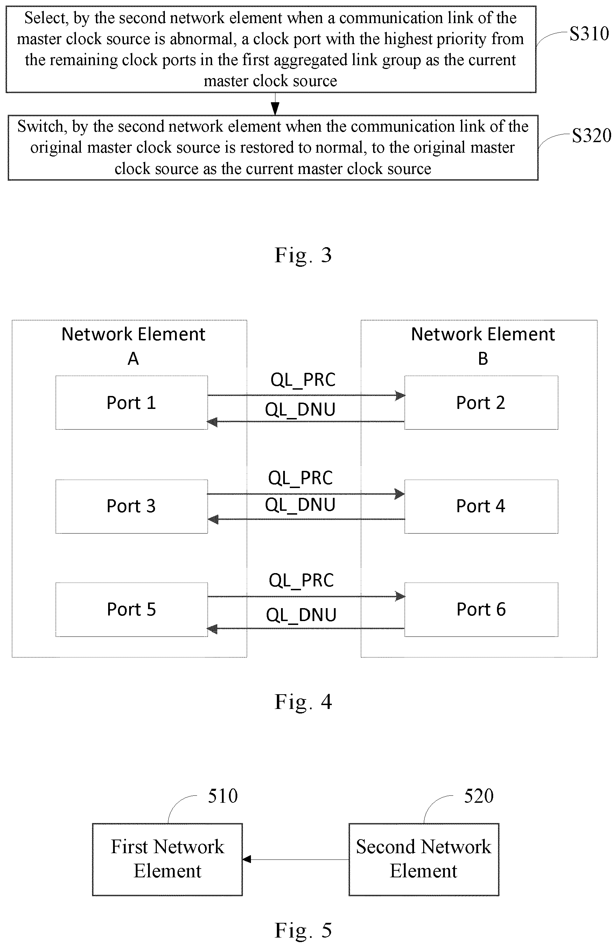

As shown in Fig. 3, the method for clock control in aggregated links in the embodiment of the present disclosure may further include the following steps S310 to S320 after step S130.

At step S310, the second network element selects, when a communication link of the master clock source is abnormal, a clock port with the highest priority from the remaining clock ports in the first aggregated link group as the current master clock source.

Specifically, when the communication link where the master clock source is located is abnormal, the communication link is interrupted, and the second network element waits for a preset time after detecting the abnormal link, and then switches the master clock source to a clock port with the highest priority among the remaining clock ports in the first aggregated link group as the current master clock source. The first network element and the second network element update the information of the master clock source and the tag information of the aggregated link group recorded on the network elements.

During switching, the second network element compares the clock ports in the second aggregated link group with the information of the master clock source, and prepares to set clock parameters for all the clock ports in the second aggregated link group. However, the clock parameters in the second aggregated link group do not need to be set again since they are set before, and the chip parameters of the ports are still kept in the slave mode.

After comparing all the clock ports on the second aggregated link with the information of the master clock source, the second network element still transmits the clock protocol packets with the quality DNU to the respective clock ports on the first network element through the clock ports. After receiving the clock protocol packets and comparing with previous clock protocol packets, the first network element detects that contents of the clock protocol packets received in two times are the same, so no processing is needed.

At step S320, the second network element switches, when the communication link of the original master clock source is restored to normal, to the original master clock source as the current master clock source.

Specifically, when the communication link of the original master clock source is restored, the second network element waits for a preset time after detecting the restored link, and then switches the master clock source back to the original master clock source as the current master clock source when the original communication link is stabilized. In other words, when the communication link of the original master clock is restored, the original clock port has the highest priority, and thus the second network element selects the clock port with the highest priority again as the master clock source. Meanwhile, the second network element may update the information of the master clock source and the tag information of the aggregated link group thereof recorded on the network element.

During switching, the second network element compares the clock ports in the second aggregated link group with the information of the master clock source, and prepares to set clock parameters for all the clock ports in the second aggregated link group. However, the clock parameters in the second aggregated link group do not need to be set again since they are set before, and the chip parameters of the ports are still kept in the slave mode.

After comparing all the clock ports on the second aggregated link with the information of the master clock source, the second network element still transmits the clock protocol packets with the quality DNU to the respective clock ports on the first network element through the clock ports. After receiving the clock protocol packets and comparing with previous clock protocol packets, the first network element detects that contents of the clock protocol packets received in two times are the same, so no processing is needed.

Since the transmitting rules for the clock protocol packets in the same aggregated link group are consistent and the configuration information of the clock ports is consistent, stable switching between the clock ports without affecting services is realized, thereby increasing the stability of clock switching and ensuring the effectiveness of clock synchronization.

To make the method for clock control in aggregated links in the embodiments of the present disclosure clearer and more understandable, as shown in Fig. 4, an exemplary clock topology diagram is further provided for illustration.

A network element A including an aggregated link group A and a network element B including an aggregated link group B are shown in Fig. 4. The aggregated link group A has clock ports 1, 3 and 5, and the aggregated link group B has clock ports 2, 4 and 6, wherein the clock port 1 is in communication link with the clock port 2, the clock port 3 is in communication link with the clock port 4, and the clock port 5 is in communication link with the clock port 6. The clock control process in aggregated links between the network elements A and B includes the following steps 1 to 10.

At step 1, SyncE clocks configured by a user respectively on ports 1 and 2 of the network elements A and B are received, and according to information of the SyncE clocks set by the user, the network elements A and B respectively configure ports 3, 5 and ports 4, 6 in the aggregated link groups A and B as clock ports.

At step 2, the network element A sets a priority of the SyncE clock on the port 1 to 1, sets priorities of the clocks on the ports 3 and 5 to 2 and 3, respectively, and records the tag information of the aggregated link group A on these three clock ports as: 0x1001.

At step 3, the network element A is connected to a PRC clock source port and specify a clock quality of QL_PRC.

At step 4, the network element A selects the PRC clock source as a master clock source, and records information of the current master clock source.

At step 5, after comparing the three SyncE clocks in the aggregated link group A with the information of the master clock source, the network element A uniformly transmits clock protocol packets with quality QL PRC on the ports 1, 3 and 5.

At step 6, the network element A uniformly sets the clock parameters of the ports 1, 3 and 5 in the aggregated link group A, and sets the Phy chip parameters of the ports to a master mode.

At step 7, the network element B selects the port 1 as the current master clock source according to the priorities of the SyncE clocks, and records information of the current master clock source and the tag information of the aggregated link group.

At step 8, the network element B compares the clock ports 2, 4, and 6 in the aggregated link group B with the information of the master clock source, uniformly sets the clock parameters of the ports 2, 4, and 6 in the aggregated link group, and sets the Phy chip parameters of the ports to a slave mode.

At step 9, the network element B uniformly transmits clock protocol packets with quality QL_DNU on the ports 2, 4 and 6.

At step 10, the ports 1, 3 and 5 of the network element A receive the clock packets with quality QL DNU indicating that these three ports are unavailable transmitted from network element B, respectively, so that the network element A will not select these three ports as the master clock source.

When the link between the port 1 and the port 2 is abnormal, the link is interrupted. After detecting the abnormal link, the network element B waits for, for example, 0.5 second, and then switches the master clock source to the port 3 with the priority 2, while updating the information of the master clock source and the tag information of the aggregated link group recorded on the network element.

When the link between the port 1 and the port 2 is restored, the network element B waits for, for example, 0.5 seconds after detecting the restored link, and then switches the master clock source to the port 1 with the priority 1 again when the link is stable, while updating the information of the master clock source and the tag information of the aggregated link group recorded on the network element.

According to the method for clock control in aggregated links of the present disclosure, a first clock port and a second clock port are added to a first network element and a second network element, respectively; the first network element and the second network element configure at least one third clock port and at least one fourth clock port with the same parameters, respectively, where the at least one third clock port and the first clock port are both in a first aggregated link group, while the at least one fourth clock port and the second clock port are both in a second aggregated link group, and the same message packet interaction is performed on the clock ports in the first aggregated link group and the clock ports in the second aggregated link group. Through the above method, the clock ports in the same aggregated link group uniformly transmit and receive message packets, thereby avoiding clock interlock; meanwhile, the configuration parameters are consistent for each clock port, thereby improving the link stability during switching of the clock ports under the aggregated link scenario.

As shown Fig. 5, in an embodiment of the present disclosure, there is provided a system for clock control in aggregated links, the system including a first network element 510 and a second network element 520 added with a first clock port and a second clock port, respectively. In the aggregated links scenario, according to the operations of the user, the clock ports are added to the first network element 510 and the second network element 520 respectively according to the aggregation groups. That is, a first clock port is added to the first network element 510, and a second clock port is added to the second network element 520.

The first network element 510 is configured to configure at least one third clock port so that parameters of the at least one third clock port are the same as parameters of the first clock port, and the at least one third clock port and the first clock port are both in a first aggregated link group.

The second network element 520 is configured to configure at least one fourth clock port so that parameters of the at least one fourth clock port are the same as parameters of the second clock port, and the at least one fourth clock port and the second clock port are both in a second aggregated link group, and the same message packet interaction is performed on the clock ports in the first aggregated link group and the clock ports in the second aggregated link group.

Specifically, the clock parameters in the same aggregated link group are kept consistent according to the clock port parameters configured by the user. That is, when the user adds any link clock port, the first network element 510 and the second network element 520 automatically configure the clock ports with the same parameters for other ports in the aggregation group.

In an embodiment, the same parameters of the ports includes two parts: one is properties of the clock ports uniformly set by a network element when a user adds the clock ports in an aggregated link group, including clock port types and some control modes for source selection, which may be collectively referred to as clock parameters; the other is configuration parameters of bottom layer hardware and chips after the network element selects a master clock port, which may be collectively referred to as chip parameters.

While performing the same message packet interaction, the first network element 510 may perform the following operations.

The first network element 510 transmits clock protocol packets with the same first quality to the second clock port and the at least one fourth clock port synchronously through the first clock port and the at least one third clock port, respectively.

The first network element 510 may be connected to a PRC port before adding the first clock port, and specify a clock quality of PRC. The first network element 510 selects the PRC clock source as a master clock source, and records information of the current master clock source.

The first network element 510 compares the clock port information in the first aggregated link group with the information of the master clock source, and transmits clock protocol packets of the same quality PRC to respective ports in the second aggregated link group uniformly through each of the ports in the first aggregated link group.

The first network element 510 uniformly sets parameters of all clock ports in the aggregated link group, for example, sets parameters of a port chip (e.g., a Phy chip) to a master mode, that is, the first network element 510 is a master clock network element.

While performing the same message packet interaction, the second network element 520 may perform the following operations.

The clock ports on the second network element 520 receive the clock protocol packets transmitted from the respective clock ports on the first network element 510, respectively, and determine that the clock protocol packets transmitted from the first network element 510 have a uniform quality PRC.

The second network element 520 selects one of the first clock port and the at least one third clock port as a current clock source according to a preset condition, each clock port records tag information of the aggregated link group where the current clock source is located, and each of the network elements records the current master clock source and the tag information of the aggregated link group where the current master clock source is located.

In an embodiment, the second network element may automatically select, for example according to the priorities, a clock port with the highest priority from the first clock port and the at least one third clock port as the current master clock source, and record the information of the master clock source and the tag information of the aggregated link group where the master clock source is located. Thus, in a case where a user-configured clock port has the highest priority, the first network element will preferentially select the user-configured clock port.

The second network element 520 compares the clock ports in the second aggregated link group with the information of the master clock source, uniformly sets parameters of the second clock port and the at least one fourth clock port in the second aggregated link group, and sets the chip parameters of the ports to a slave mode, that is, the second network element 520 is a slave network element.

The second network element 520 transmits clock protocol packets with the same second quality to the first clock port and the at least one third clock port through the second clock port and the at least one fourth clock port, respectively.

Specifically, the second network element 520 transmits clock protocol packets with a quality DNU (Do Not Use) carrying information of not available to respective ports in the first aggregated link group uniformly through each of the ports in the second aggregated link group.

The clock ports on the first network element 510 receive the DNU clock protocol packets indicating that the clock ports on the second network element 520 are not available transmitted from the second network element 520, so that the second clock port and the at least one fourth clock port in the second aggregated link group in the second network element 520 are excluded from being selected as a master clock source, thereby avoiding the interlock between the first network element 510 and the second network element 520.

It will be appreciated by those skilled in the art that in an embodiment, the first network element 510 is set as a master clock network element and the second network element 520 is set as a slave network element, but the master clock network element and the slave network element are relative. If a third network element is further included, for the third network element, the second network element 520 may be set as the master clock network element, and the third network element may be the slave network element, and so on, which is not specifically limited in the embodiments of the present disclosure.

The first network element 510 is further configured to set priorities of the first clock port and the at least one third clock port before performing the same message interaction.

Specifically, the first network element 510 may set, for example, a user-added clock port (e.g., the first clock port) has the highest priority, and the other clock ports (e.g., the at least one third clock port) have sequentially decreased priorities in accordance with their order in the first aggregated link group.

The second network element 520 is further configured to, when a communication link of the master clock source is abnormal, select a clock port with the highest priority from the remaining clock ports in the first aggregated link group as the current master clock source.

Specifically, when the communication link where the master clock source is located is abnormal, the communication link is interrupted, and the second network element 520 waits for a preset time after detecting the abnormal link, and then switches the master clock source to a clock port with the highest priority among the remaining clock ports in the first aggregated link group as the current master clock source. The first network element 510 and the second network element 520 update the information of the master clock source and the tag information of the aggregated link group recorded on the network elements.

During switching, the second network element 520 compares the clock ports in the second aggregated link group with the information of the master clock source, and prepares to set clock parameters for all the clock ports in the second aggregated link group. However, the clock parameters in the second aggregated link group do not need to be set again since they are set before, and the chip parameters of the ports are still kept in the slave mode.

After comparing all the clock ports on the second aggregated link with the information of the master clock source, the second network element 520 still transmits the clock protocol packets with the quality DNU to the respective clock ports on the first network element 510 through the clock ports. After receiving the clock protocol packets and comparing with previous clock protocol packets, the first network element 510 detects that contents of the clock protocol packets received in two times are the same, so no processing is needed.

The second network element 520 is further configured to, when the communication link of the original master clock source is restored to normal, switch to the original master clock source as the current master clock source.

Specifically, when the communication link of the original master clock source is restored, the second network element 520 waits for a preset time after detecting the restored link, and then switches the master clock source back to the original master clock source as the current master clock source when the original communication link is stabilized. In other words, when the communication link of the original master clock is restored, the original clock port has the highest priority, and thus the second network element 520 selects the clock port with the highest priority again as the master clock source. Meanwhile, the second network element 520 may update the information of the master clock source and the tag information of the aggregated link group thereof recorded on the network element.

During switching, the second network element 520 compares the clock ports in the second aggregated link group with the information of the master clock source, and prepares to set clock parameters for all the clock ports in the second aggregated link group. However, the clock parameters in the second aggregated link group do not need to be set again since they are set before, and the chip parameters of the ports are still kept in the slave mode.

After comparing all the clock ports on the second aggregated link with the information of the master clock source, the second network element 520 still transmits the clock protocol packets with the quality DNU to the respective clock ports on the first network element 510 through the clock ports. After receiving the clock protocol packets and comparing with previous clock protocol packets, the first network element 510 detects that contents of the clock protocol packets received in two times are the same, so no processing is needed.

Since the transmitting rules for the clock protocol packets in the same aggregated link group are consistent and the configuration information of the clock ports is consistent, stable switching between the clock ports without affecting services is realized, thereby increasing the stability of clock switching, and ensuring the effectiveness of clock synchronization.

According to the system for clock control in aggregated links of the present disclosure, a first clock port and a second clock port are added to a first network element 510 and a second network element 520, respectively; the first network element 510 and the second network element 520 configure at least one third clock port and at least one fourth clock port with the same parameters, respectively, where the at least one third clock port and the first clock port are both in a first aggregated link group, while the at least one fourth clock port and the second clock port are both in a second aggregated link group, and the same message packet interaction is performed on the clock ports in the first aggregated link group and the clock ports in the second aggregated link group. Through the system for clock control in aggregated links as described above, the clock ports in the same aggregated link group uniformly transmit and receive message packets, thereby avoiding clock interlock; meanwhile the configuration parameters are consistent for each clock port, thereby improving the link stability during switching of the clock ports under the aggregated link scenario.

In an embodiment of the present disclosure, there is provided a device including a processor and a memory. The processor is configured to execute a program for clock control in aggregated links stored in the memory to implement the method for clock control in aggregated links as described in the above embodiments and achieve the same technical effects. In an embodiment of the present disclosure, there is further provided a computer readable storage medium. The computer readable storage medium has one or more programs stored thereon. The computer readable storage medium may include a volatile memory such as a random access memory. The memory may also include a non-volatile memory, such as a read only memory, a flash memory, a hard disk, or a solid state disk. The memory may also include a combination of memories as described above. The one or more programs in the computer readable storage medium, when executed by the one or more processors, cause the method for clock control in aggregated links of the embodiments described above to be implemented by the one or more processors and achieve the same technical effects.

It should be noted that the term "comprise", "comprising" or any variant thereof used herein means to be non-exclusive so that a process, method, item or apparatus including a series of elements includes not only said elements, but also other elements not explicitly listed, or inherent elements of such processes, methods, items or apparatus. In the absence of more limitations, an element defined by "comprising a ..." do not exclude the existence of additional identical elements in the process, method, item or apparatus including the element.

The serial numbers in the embodiments of the present disclosure are shown for description only and do not represent preferences of the embodiments.

Through the description of the above embodiments, those skilled in the art can clearly understand that the above embodiments may be implemented by means of software plus a necessary general hardware platform, or may be implemented by hardware. Based on such understanding, the essential parts of the technical solution of the present disclosure or the parts contributing to the prior art may be embodied in the form of software products. The software products may be stored in a storage medium (such as an ROM/RAM, a disk, or an optical disc) and includes a number of instructions to make a terminal (which may be a mobile phone, a computer, a server, an air conditioner or a network device, etc.) to execute the methods of respective embodiments of the present disclosure.

The embodiments of the present disclosure are described above with reference to the drawings, but the present disclosure is not limited to the above-described specific embodiments. In light of the present disclosure, those skilled in the art can make many modifications and substitutions without departing from the spirit of the disclosure and the scope of the claims, which modifications and substitutions fall within the scope of the disclosure.

## Claims

1. A method for clock control in aggregated links, comprising:
adding a first clock port and a second clock port to a first network element and a second network element, respectively;
configuring, by the first network element and the second network element, at least one third clock port and at least one fourth clock port, respectively, wherein parameters of the at least one third clock port are the same as parameters of the first clock port, and the at least one third clock port and the first clock port are both in a first aggregated link group, while parameters of the at least one fourth clock port are the same as parameters of the second clock port, and the at least one fourth clock port and the second clock port are both in a second aggregated link group; and
performing the same message packet interaction on the clock ports in the first aggregated link group and on the clock ports in the second aggregated link group.

2. The method for clock control in aggregated links according to claim 1, wherein before the step of performing the same message packet interaction on the clock ports in the first aggregated link group and the clock ports in the second aggregated link group, the method further comprises:
setting, by the first network element, priorities of the first clock port and the at least one third clock port.

3. The method for clock control in aggregated links according to claim 2, further comprising:
selecting, by the second network element when a communication link of a master clock source is abnormal, a clock port with the highest priority from the remaining clock ports in the first aggregated link group as the current master clock source; and
switching, by the second network element when the communication link of the original master clock source is restored to normal, to the original master clock source as the current master clock source.

4. The method for clock control in aggregated links according to claim 2, wherein the step of performing the same message packet interaction on the clock ports in the first aggregated link group and the clock ports in the second aggregated link group comprises:
setting, by the first network element, the parameters of the first clock port and the at least one third clock port, wherein setting the parameters comprises setting chip parameters among the parameters to a master mode; and
transmitting, by the first network element, clock protocol packets with the same first quality to the second clock port and the at least one fourth clock port synchronously through the first clock port and the at least one third clock port, respectively.

5. The method for clock control in aggregated links according to claim 4, wherein the step of performing the same message packet interaction on the clock ports in the first aggregated link group and the clock ports in the second aggregated link group further comprises:
selecting automatically, by the second network element after receiving the clock protocol packets with the first quality and in accordance with the priorities, a clock port with the highest priority from the first clock port and the at least one third clock port as the current master clock source, and recording the master clock source and tag information of the aggregated link group where the master clock source is located;
setting, by the second network element, the parameters of the second clock port and the at least one fourth clock port, wherein setting the parameters comprises setting chip parameters among the parameters to a slave mode; and
transmitting, by the second network element, clock protocol packets with a second quality to the first clock port and the at least one third clock port through the second clock port and the at least one fourth clock port, respectively.

6. The method for clock control in aggregated links according to claim 5, further comprising:
determining, by the first network element according to the clock protocol packets with the second quality, that the second clock port and the at least one fourth clock port are not available, and excluding the selection of the second clock port and the at least one fourth clock port as a master clock source, wherein the clock protocol packets with the second quality comprise clock protocol packets of quality QLDNU.

7. The method for clock control in aggregated links according to claim 1, wherein before the step of adding the first clock port and the second clock port to the first network element and the second network element, respectively, the method further comprises:
connecting the first network element to a clock source port of a Primary Reference Clock (PRC), and selecting the PRC as the master clock source.

8. A system for clock control in aggregated links, comprising a first network element and a second network element added with a first clock port and a second clock port, respectively, wherein
the first network element is configured to configure at least one third clock port so that parameters of the at least one third clock port are the same as parameters of the first clock port, and the at least one third clock port and the first clock port are both in a first aggregated link group; and
the second network element is configured to configure at least one fourth clock port so that parameters of the at least one fourth clock port are the same as parameters of the second clock port, and the at least one fourth clock port and the second clock port are both in a second aggregated link group, and wherein
the same message packet interaction is performed on the clock ports in the first aggregated link group and the clock ports in the second aggregated link group.

9. The system for clock control in aggregated links according to claim 8, wherein
the first network element is further configured to, before performing the same message packet interaction on the clock ports in the first aggregated link group and the clock ports in the second aggregated link group, set priorities of the first clock port and the at least one third clock port.

10. The system for clock control in aggregated links according to claim 9, wherein the second network element is further configured to, when a communication link of a master clock source is abnormal, select a clock port with the highest priority from the remaining clock ports in the first aggregated link group as the current master clock source; and
the second network element is further configured to, when the communication link of the original master clock source is restored to normal, switch to the original master clock source as the current master clock source.

11. The system for clock control in aggregated links according to claim 9, wherein the first network element is configured to perform the same message packet interaction by:
setting the parameters of the first clock port and the at least one third clock port, wherein setting the parameters comprises setting chip parameters among the parameters to a master mode; and
transmitting clock protocol packets with the same first quality to the second clock port and the at least one fourth clock port synchronously through the first clock port and the at least one third clock port, respectively.

12. The system for clock control in aggregated links according to claim 11, wherein the second network element is configured to perform the same message packet interaction by:
selecting automatically, after receiving the clock protocol packets with the first quality and in accordance with the priorities, a clock port with the highest priority from the first clock port and the at least one third clock port as the current master clock source, and recording the master clock source and tag information of the aggregated link group where the master clock source is located;
setting the parameters of the second clock port and the at least one fourth clock port, wherein setting the parameters comprises setting chip parameters among the parameters to a slave mode; and
transmitting clock protocol packets with a second quality to the first clock port and the at least one third clock port through the second clock port and the at least one fourth clock port, respectively.

13. The system for clock control in aggregated links according to claim 12, wherein the first network element is further configured to determine, according to the clock protocol packets with the second quality, that the second clock port and the at least one fourth clock port are not available, and exclude the selection of the second clock port and the at least one fourth clock port as a master clock source, wherein the clock protocol packets with the second quality comprises clock protocol packets of quality QLDNU.

14. The system for clock control in aggregated links according to claim 8, wherein the first network element is connected to a clock source port of a Primary Reference Clock (PRC) and selecting the PRC as the master clock source.

15. A computer readable storage medium storing a computer program thereon which, when executed by a processor, causes the processor to perform the method for clock control in aggregated links according to any one of claims 1 to 7.
